# EUROPÄISCHE PATENTSCHRIFT

(11) **EP 3 391 602 B1**
(45) Veröffentlichungstag und Bekanntmachung des Hinweises auf die Patenterteilung: **16.09.2020**
(21) Anmeldenummer: 16810291.1
(22) Anmeldetag: 07.12.2016
(51) Int. Cl.: H04L 25/02

(54) **SCHALTUNGSANORDNUNG FÜR EINEN SCHALTBAREN LEITUNGSABSCHLUSS EINES SERIELLEN BUSSES**
CIRCUIT ASSEMBLY FOR A SWITCHABLE LINE TERMINATION OF A SERIAL BUS
AGENCEMENT DE CIRCUITS POUR TERMINAISON DE LIGNE COMMUTABLE D'UN BUS SÉRIE

(30) Priorität: 14.12.2015 DE 102015121732
(43) Veröffentlichungstag der Anmeldung: 24.10.2018
(73) Patentinhaber: KNORR-BREMSE Systeme für Nutzfahrzeuge GmbH, 80809 München (DE)
(72) Erfinder: GSCHEIDLE, Wolfgang, 71720 Oberstenfeld (DE)
(86) Internationale Anmeldenummer: PCT/EP2016/079994
(87) Internationale Veröffentlichungsnummer: WO 2017/102479

(56) Entgegenhaltungen:
- EP-A1- 2 166 717

## Beschreibung

Die Erfindung betrifft eine Schaltungsanordnung für einen schaltbaren Leitungsabschluss eines seriellen Busses, und bezieht sich insbesondere auf eine Schaltungsanordnung zum elektronischen Zu- und/oder Wegschalten einer Terminierung an einem CAN-Bus gemäß dem Oberbegriff von Anspruch 1.

In verschiedenartigen technischen Gebieten, wie beispielsweise der Automobiltechnik, sind serielle Busanordnungen wie CAN (Controller Area Network), FlexRay und dergleichen für die Vernetzung von Steuergeräten verbreitet. Der CAN-Bus zum Beispiel arbeitet nach dem so genannten Multi-Master-Prinzip und verbindet mehrere gleichberechtigte Steuergeräte. Ein CSMA/CR-Verfahren löst Kollisionen, d.h. gleichzeitige Buszugriffe, auf, ohne dass die gewinnende, höher priorisierte Nachricht beschädigt wird. Dazu sind die Bits - je nach Zustand - dominant bzw. rezessiv (ein dominantes Bit überschreibt ein rezessives Bit). Die logische 1 ist dabei rezessiv (Wired-AND). Der Bus kann physisch mit etwa Kupferleitungen oder über Glasfaser ausgeführt sein.

Datenbusse der vorgenannten Art müssen aufgrund der insbesondere im automotiven Umfeld geforderten Störfestigkeit sehr stabil sein und sind deshalb in der Regel als linearer Bus ausgeführt. Der Bus ist dabei an beiden physischen Enden seiner geometrischen Ausbreitung mit jeweils einem an den Wellenwiderstand der Busleitungen angepassten Abschlusswiderstand (Busterminierung) abgeschlossen bzw. terminiert. Dadurch können bei höherfrequenten Datenübertragungsraten entstehende Reflexionen auf den Busleitungen minimiert und der Bus optimal betrieben werden. Da das CAN-Bussystem ein seriell arbeitender 2-Draht-Bus mit offener Architektur ist, der als Übertragungsmedium vorwiegend verdrillte TP (twisted pair)-Kabel mit einer Nennimpedanz von 120 Ohm verwendet, beträgt bei einem CAN-Bus ein üblicher Abschlusswiderstand bzw. eine übliche Busterminierung etwa 120 Ω jeweils an den beiden Enden des Busses.

Da die Baudraten aktueller Bussysteme aufgrund ihrer Echtzeitfähigkeit und zunehmender Busbelastung zu immer höheren Werten tendieren, ist ein korrekter Busabschluss für eine sichere Kommunikation zwingend notwendig.

Innerhalb eines Fahrzeugnetzwerks kann aufgrund unterschiedlicher Ausrüstungsgrade jeweiliger Fahrzeuge oder durch Verbau ein und desselben Steuergerätes bzw. ein und derselben ECU (Electronic Control Unit) in unterschiedlichen Fahrzeugtypen an unterschiedlichen Stellen des Busses die Notwendigkeit bestehen, die vorgenannten Abschlusswiderstände jeweils anzuordnen oder wegzulassen. In anderen Worten muss in Abhängigkeit von einem Anschaltungsort einer ECU an den Bus ein Abschlusswiderstand vorhanden sein, oder kann oder muss dieser entfallen.

Bekannte Anordnungen, die beispielsweise manuell, durch Drahtbrücken, Brücken in einem Kabelbaum und dergleichen zuschaltbare Abschlusswiderstände beinhalten können, sind insoweit unflexibel und dahingehend nachteilig, dass Veränderungen der Kenndaten eines Busses nicht ausgeschlossen werden können und eine Funktion ohne jegliche Beeinflussung der Buskommunikation nicht sichergestellt werden kann.

Eine gattungsgemäße Schaltungsanordnung ist aus EP 2 166 717 A1 bekannt.

Der Erfindung liegt die Aufgabe zugrunde, eine elektronische Schaltungsanordnung für einen schaltbaren Leitungsabschluss eines seriellen Busses bereitzustellen, die es in Abhängigkeit von einer vorliegenden Konfiguration eines seriellen Busses bzw. einer entsprechenden Bus- und Steuergerätekonfiguration erlaubt, erforderliche Abschlusswiderstände zuzuschalten (vorzusehen) oder abzuschalten (entfallen zu lassen).

Darüber hinaus soll eine elektronische Schaltungsanordnung für einen schaltbaren Leitungsabschluss eines seriellen Busses bereitgestellt werden, die Kenndaten eines beschalteten Busses nicht verändert und die Funktion ohne Beeinflussung der Kommunikation sicherstellt.

Erfindungsgemäß wird diese Aufgabe durch eine Schaltungsanordnung für einen schaltbaren Leitungsabschluss eines seriellen Busses mit den Merkmalen des Anspruchs 1 gelöst. Vorteilhafte Weiterbildungen der Erfindung sind Gegenstand der beigefügten Unteransprüche.

Der Erfindung liegt die allgemeine Idee zugrunde, eine elektronische Schaltungsanordnung bereitzustellen, mittels welcher ein Leitungsabschluss bzw. Abschlusswiderstand eines seriellen Busses, wie beispielsweise eines CAN-Busses, schaltbar realisiert wird und durch elektronisch arbeitende Schaltelemente und einen in einer elektronischen Steuereinheit ohnehin vorhandenen Mikrocontroller, bzw. bevorzugt einen Rechnerport desselben, elektronisch zu- oder abgeschaltet werden kann. Dadurch kann vorteilhaft das Zu-/Abschalten des Abschlusswiderstands (Terminierungswiderstands) beispielsweise im Rahmen einer Bandendeprogrammierung während der Herstellung beispielsweise eines Fahrzeugs durchgeführt werden.

Als Vorteile sind zumindest eine Programmierbarkeit verschiedener Widerstandswerte, ein variabler, an fahrzeugtechnische und/oder geometrische Gegebenheiten anpassbarer und optimierbarer Busabschluss, eine bestmögliche Datenübertragungsqualität und der Wegfall von Fehlanpassungen an die Busleitungen erzielbar.

In Übereinstimmung mit dem Vorstehenden wird die Aufgabe im Einzelnen gelöst durch eine Schaltungsanordnung für einen schaltbaren Leitungsabschluss eines seriellen Busses, die eine elektronische Schaltvorrichtung beinhaltet, die zwischen Signalleitungen des seriellen Busses geschaltet und dazu angeordnet ist, gesteuert durch eine Steuereinrichtung' einer elektronischen Steuereinheit einen vorbestimmten Leitungsabschluss an den seriellen Bus zu schalten oder den Leitungsabschluss von dem seriellen Bus wegzuschalten.

Erfindungsgemäß sind eine Sperreinrichtung mit einem Sperrelement und eine dritte elektronische Schalteinrichtung vorgesehen, die dazu angeordnet ist, die erste elektronische Schalteinrichtung und die zweite elektronische Schalteinrichtung durch Zuführen oder Vorenthalten einer Ansteuerspannung anzusteuern, wobei das Sperrelement die erste elektronische Schalteinrichtung und die zweite elektronische Schalteinrichtung in einem gesperrten Zustand hält, wenn die dritte elektronische Schalteinrichtung der ersten elektronischen Schalteinrichtung und der zweiten elektronischen Schalteinrichtung die Ansteuerspannung vorenthält.

Weiterhin erfindungsgemäß ist das Sperrelement ein ohmscher Widerstand, der an einen gemeinsamen Knotenpunkt des ersten Leitungsabschlusselements und des zweiten Leitungsabschlusselements beschaltet ist, und die dritte elektronische Schalteinrichtung ein in Abhängigkeit eines von der externen Steuereinrichtung zugeführten Steuersignals schaltender elektronischer Schalter, insbesondere ein Bipolartransistor oder ein MOSFET.

Bevorzugt beinhaltet die elektronische Schaltvorrichtung eine erste und eine zweite elektronische Schalteinrichtung, und beinhaltet der. Leitungsabschluss ein erstes und ein zweites Leitungsabschlusselement, wobei die erste und die zweite elektronische Schalteinrichtung antiseriell zueinander beschaltet sind, und die erste und die zweite elektronische Schalteinrichtung dazu angeordnet sind, symmetrisch und spannungsgesteuert jeweils das erste und das zweite Leitungsabschlusselement an die erste und die zweite Signalleitung des seriellen Busses gleichzeitig anzuschalten oder von dieser gleichzeitig wegzuschalten.

Bevorzugt ist das erste Leitungsabschlusselement ein ohmscher Widerstand, ist das zweite Leitungsabschlusselement ein ohmscher Widerstand und sind das erste und das zweite Leitungsabschlusselement seriell geschaltet und dazu angeordnet, eine Terminierungseinrichtung mit einem vorbestimmten Leitungsabschlusswiderstand für ein physisches Ende des seriellen Busses bereitzustellen.

Bevorzugt sind die erste elektronische Schalteinrichtung und die zweite elektronische Schalteinrichtung jeweils Feldeffekttransistoren (FETs). Aufgrund der Wechselspannungs-charakteristik des Bussignals eignen sich Feldeffekttransistoren besser als beispielsweise Bipolartransistoren zum Zuschalten oder Abschalten der Abschlusswiderstände, da sie im Gegensatz zu Bipolartransistoren bipolare Spannungen/Ströme schalten können.

Bevorzugt ist der serielle Bus ein CAN-Bus und sind die erste elektronische Schalteinrichtung und die zweite elektronische Schalteinrichtung dazu angeordnet, in einem Gleichtaktbereich des CAN-Busses zu arbeiten. Es sind aber auch andere differenzielle Busse anschließbar.

Bevorzugt ist eine Spannungsauskopplungseinrichtung vorgesehen, die dazu angeordnet ist, eine mittlere Busspannung des seriellen Busses hochohmig auszukoppeln.

Bevorzugt ist eine Spannungsquellen-Erzeugungseinrichtung vorgesehen, die dazu angeordnet ist, aus der ausgekoppelten mittleren Busspannung eine niederohmige Spannungsquelle zur Bereitstellung der Ansteuerspannung für die erste und die zweite elektronische Schalteinrichtung zu erzeugen, wobei die Ansteuerspannung derart erzeugt wird, dass innerhalb eines Gleichtaktbereichs des seriellen Busses für die erste elektronische Schalteinrichtung und die zweite elektronische Schalteinrichtung eine die erste elektronische Schalteinrichtung und die zweite elektronische Schalteinrichtung sicher durchschaltende Gate-Source-Spannung bereitgestellt wird.

Bevorzugt ist die Spannungsquellen-Erzeugungseinrichtung dazu angeordnet, die Ansteuerspannung für die erste und die zweite elektronische Schalteinrichtung innerhalb des Gleichtaktbereichs des seriellen Busses auf der Grundlage der ausgekoppelten mittleren Busspannung zu erzeugen und bei einer betriebsbedingt auftretenden Verschiebung der mittleren Busspannung die Ansteuerspannung und damit verbunden die Schaltbarkeit der ersten elektronischen Schalteinrichtung und der zweiten elektronischen Schalteinrichtung zumindest innerhalb der Grenzen des Gleichtaktbereichs des seriellen Busses nachzuführen.

Bevorzugt ist eine Spannungsregeleinrichtung vorgesehen, die dazu angeordnet ist, die durch die Spannungsquellen-Erzeugungseinrichtung erzeugte Ansteuerspannung auf einen vorbestimmten Wert zu regeln.

Bevorzugt ist ein Filter, eine Entstöreinrichtung oder ein Integrationsglied zur Entstörung von Spannungsspitzen an der Ansteuerspannung vorgesehen, insbesondere zur Erzeugung einer mittleren Busspannung.

Bevorzugt ist eine Überspannungsschutzeinrichtung zum Schutz der Spannungsquellen-Erzeugungseinrichtung vor Überspannung vorgesehen.

Bevorzugt ist ein Spannungsausgang vorgesehen, an dem die Ausgangsspannung der Spannungsquellen-Erzeugungseinrichtung zu Diagnosezwecken an eine externe Einrichtung ausleitbar ist.

Die Erfindung wird nachstehend anhand bevorzugter Ausführungsbeispiele unter Bezugnahme auf die Zeichnung näher beschrieben. Es zeigen:
- **Fig. 1**: eine schematische Darstellung einer erfindungsgemäß zugrunde liegenden prinzipiellen Konfiguration einer Schaltungsanordnung für einen schaltbaren Leitungsabschluss eines seriellen Busses;
- **Fig. 2**: eine ausschnittsweise, schematische Darstellung der Schaltungsanordnung für einen schaltbaren Leitungsabschluss eines seriellen Busses gemäß einem bevorzugten Ausführungsbeispiel; und
- **Fig. 3**: eine schematische Darstellung mit Bezug auf einen ausschnittsweisen Signalverlauf am Beispiel eines CAN-Busses.

Es wird angemerkt, dass in der Zeichnung äquivalente oder gleich wirkende Elemente dieselben oder zumindest ähnliche Bezugszeichen tragen können und in diesem Fall jeweils nicht nochmals beschrieben werden.

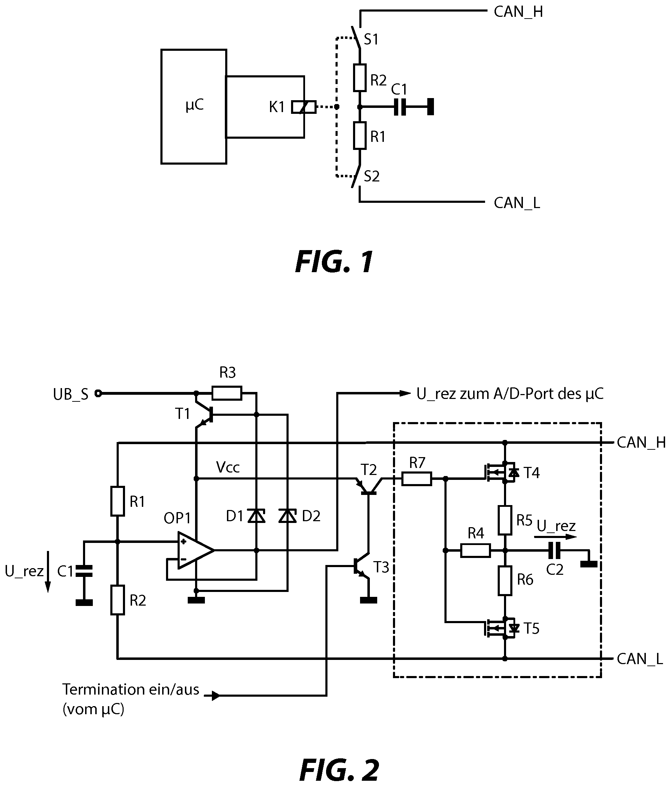

**Fig. 1** zeigt eine schematische Darstellung einer erfindungsgemäß zugrunde liegenden prinzipiellen Konfiguration einer Schaltungsanordnung für einen schaltbaren Leitungsabschluss eines seriellen Busses.

Gemäß **Fig. 1** ist ein Mikrocontroller µC bzw. sind vorbestimmte Ports desselben über Eingangs-/Ausgangs-Leitungen bzw. Ansteuerleitungen mit einer Schaltungsanordnung K verbunden, die in dem vorliegenden Ausführungsbeispiel eine Schaltungsanordnung für einen schaltbaren Leitungsabschluss eines seriellen Busses bildet. Die Schaltungsanordnung K beinhaltet Terminierungs- bzw. (Leitungs)Abschlusswiderstände für den seriellen Bus und ist dazu angeordnet, diese Terminierungs- bzw. Abschlusswiderstände mittels elektronischen Schalteinrichtungen bzw. Schaltern S1, S2 fallweise an Signalleitungen CAN_H, CAN_L des seriellen Busses anzuschalten oder wegzuschalten.

Zwischen den elektronischen Schalteinrichtungen S1, S2 liegen seriell verschaltet ein erster Widerstand R1 und ein zweiter Widerstand R2 mit einem gemeinsamen Knotenpunkt, an welchem ein erster Kondensator C1 zur Masse bzw. einem Bezugspotenzial hin verbunden ist. Der erste Widerstand R1, der zweite Widerstand R2 und der Kondensator C1 dienen dazu, den angeschlossenen differenziellen Bus möglichst symmetrisch zu dessen Mittelspannung U_rez abzuschließen, da Asymmetrien zur Mittenspannung U_rez die Funktion des Busses stören können.

**Fig. 2** zeigt eine ausschnittsweise, schematische Darstellung der Schaltungsanordnung für einen schaltbaren Leitungsabschluss eines seriellen Busses gemäß einem bevorzugten Ausführungsbeispiel.

Gemäß **Fig. 2** beinhaltet die Schaltungsanordnung gemäß dem vorliegenden Ausführungsbeispiel den ersten Kondensator C1, den ersten Widerstand R1, den zweiten Widerstand R2, einen Operationsverstärker OP1, eine erste Diode D1 (z.B. 10V) und eine zweite Diode D2, die beispielsweise als Zenerdioden vorgesehen sind, einen ersten Transistor T1, einen dritten Widerstand R3, der beispielsweise mit einem Wert von 10 kΩ vorgesehen sein kann, einen zweiten Transistor T2, einen dritten Transistor T3, einen vierten Widerstand R4, einen fünften Widerstand R5, einen sechsten Widerstand R6, einen vierten Transistor T4, der vorzugsweise in Form eines Feldeffekttransistors vorgesehen ist, einen fünften Transistor T5, der vorzugsweise ebenfalls in Form eines Feldeffekttransistors vorgesehen ist, und einen zweiten Kondensator C2.

In dem vorliegenden Ausführungsbeispiel bilden der vierte Transistor T4 und der fünfte Transistor T5 eine elektronische Schaltvorrichtung mit einer ersten elektronischen Schalteinrichtung und einer zweiten elektronischen Schalteinrichtung, und bilden der fünfte Widerstand R5 und der sechste Widerstand R6 einen vorbestimmten Leitungsabschluss mit einem ersten Leitungsabschlusselement und einem zweiten Leitungsabschlusselement. Darüber hinaus bildet der vierte Widerstand R4 ein Sperrelement einer Sperreinrichtung, die die beiden Transistoren T4 und T5 im gesperrten (abgeschalteten Zustand) hält, wenn der Schalttransistor T2 abgeschaltet ist bildet der zweite Transistor T2 eine dritte elektronische Schalteinrichtung, bilden der vierte Transistor T4 und der fünfte Transistor T5 eine Sperreinrichtung zum Sperren der beiden Schalter , die den Abschlusswiderstand an den Bus schalten, und bilden der erste Widerstand R1, der zweite Widerstand R2 und der erste Kondensator C1 eine Spannungsauskopplungseinrichtung.

Im Wesentlichen kann die Schaltungsanordnung gemäß dem Ausführungsbeispiel als zwischen den Signalleitungen des seriellen Busses liegend betrachtet werden. D.h., ein Teil der von der Schaltungsanordnung benötigten Ansteuerung und/oder Versorgung wird aus dem seriellen Bus abgeleitet. Weiterhin wird von außerhalb der Schaltungsanordnung eine Versorgungsspannung zugeführt, und ist die Schaltungsanordnung mit Portleitungen zu bzw. von dem Mikrocontroller µC einer extern ansteuernden elektronischen Steuereinheit bzw. ECU verbunden.

Im Einzelnen liegt der erste Kondensator C1 einerseits an Masse bzw. einem Bezugspotenzial und andererseits an einem Knotenpunkt, der auch den ersten Widerstand R1 und den zweiten Widerstand R2 verbindet. An dem ersten Kondensator C1 liegt die vorstehend erwähnte mittlere Busspannung U_rez an. Einer der Anschlüsse des ersten Widerstands R1 ist mit einer der CAN-Signalleitungen, im vorliegenden Ausführungsbeispiel mit CAN_H, verbunden, und einer der Anschlüsse des zweiten Widerstands R2 ist mit der anderen der CAN-Signalleitungen, im vorliegenden Ausführungsbeispiel mit CAN_L, verbunden.

Der Knotenpunkt führt darüber hinaus zu einem positiven ("+"-) Eingang des Operationsverstärkers OP1, der in der vorliegenden Konfiguration als Spannungsfolger bzw. Impedanzwandler arbeitet. Ein invertierender ("-"-) Eingang des Operationsverstärkers bzw. Impedanzwandlers OP1 ist mit der Anode der ersten Diode D1 verbunden, deren Kathode über einen weiteren Knotenpunkt mit dem dritten Widerstand R3 verbunden ist. Der andere Anschluss des dritten Widerstands R3 liegt auf einem (Versorgungs-)Potenzial UB_S.

Der Operationsverstärker OP1 ist weiter mit dem ersten Transistor T1 beschaltet, dessen Kollektor vor dem Widerstand R3 auf dem Potenzial UB_S liegt und dessen Emitter mit dem positiven Spannungseingang des Operationsverstärkers OP1 verbunden ist. Die Basis des ersten Transistors T1 ist mit der Kathode der ersten Diode D1 und der Kathode der zweiten Diode D2 verbunden.

Die in diesem Ausführungsbeispiel eine Entstöreinrichtung und eine Überspannungsschutzeinrichtung bildende zweite Diode D2 ist zur Entstörung von zu hohen Spannungsspitzen an einer Ansteuerspannung Vcc und als ein Überspannungsschutz für den Operationsverstärker OP1 vorgesehen. Der negative Spannungseingang des Operationsverstärkers ist mit der Masse bzw. dem Bezugspotenzial und der Anode der zweiten Diode D2 verbunden.

In der hier verwendeten Konfiguration bildet der als Spannungsfolger bzw. Impedanzwandler arbeitende Operationsverstärker OP1 einen nichtinvertierenden (linearen) Verstärker aus, dessen invertierender Eingang direkt mit dem Ausgang verbunden ist. Die direkte Gegenkopplung ergibt einen Verstärkungsfaktor von 1, so dass die Ausgangsspannung bei normaler Funktion genau der Eingangsspannung entspricht und die Ausgangsspannung direkt der Eingangsspannung folgt. Da der Eingangswiderstand des positiven Eingangs sehr groß und im Vergleich dazu der Ausgangswiderstand sehr klein ist, wirkt der Operationsverstärker OP1 als Puffer zwischen einer hochohmigen Spannungsquelle (hier der hochohmig ausgekoppelten mittleren Busspannung U_rez) und einer nachfolgenden niederohmigen Last. Damit wird die hochohmige Spannungsquelle am Eingang minimal belastet und in der Spannungshöhe geringstmöglich verfälscht. Der Operationsverstärker OP1 als Impedanzwandler kann daher aus einer relativ hochohmigen Spannungsquelle (d.h. der ausgekoppelten mittleren Busspannung) eine niederohmige, durch Folgeschaltungen belastbare Spannungsquelle machen bzw. erzeugen und bildet daher in diesem Ausführungsbeispiel eine Spannungsquellen-Erzeugungseinrichtung bzw. eine Spannungsregeleinrichtung in Verbindung mit der ersten Diode D1, dem dritten Widerstand R3 und dem ersten Transistor T1.

Andere Verstärkungsfaktoren sind natürlich möglich.

Die Spannung am Ausgang des Operationsverstärkers OP1 (näherungsweise U_rez) die ebenfalls an der Anode der ersten Diode D1 liegt, kann in dem vorliegenden Ausführungsbeispiel zu beispielsweise Diagnosezwecken und dergleichen, einem Analog/Digital- bzw. A/D-Port des Mikrocontrollers µC zugeführt werden und bei einem unterhalb oder oberhalb eines Grenzwertes liegenden Wertes eine Fehlermeldung in einem Gesamtsystem, beispielsweise in einem Fahrzeug, auslösen.

In dem vorliegenden Ausführungsbeispiel wird darüber hinaus mittels der ersten (Zener-) Diode D1 und dem dritten Widerstand R3, die in dieser Konfiguration eine Stabilisierungsschaltung bilden, auf zweckmäßige Weise die Versogrungsspannung für OP1 erzeugt. Im Einzelnen wird die Schaltung wie folgt beschrieben: OP1 wird durch die Spannung Vcc versorgt. Vcc wird, unter der Annahme, dass direkt nach dem Einschalten der ECU der Ausgang von OP1 noch auf einer undefinierten Spannung nahe 0 V liegt, durch die Z-Diode D2 auf den Spannungswert von D2 begrenzt (z.B. 20V). OP1 erfasst die mittlere Busspannung U_rez und koppelt sie niederohmig am Ausgang von OP1 aus, die Anode von D1 ist an den Ausgang von OP1 angeschlossen. Damit ergibt sich Vcc zu Vcc = U_rez + UD1, d.h. Vcc wird jetzt durch OP1 geregelt und nicht mehr durch UD2. Es gilt: UD1 < UD2 und Vcc muss immer kleiner sein als die zulässige UGS der beiden FETs T4/T5

Gemäß **Fig. 2** liegt in der Schaltungsanordnung gemäß dem Ausführungsbeispiel weiter der Emitter des zweiten Transistors T2 auf der Spannung Vcc, ist die Basis des zweiten Transistors T2 mit dem siebten Widerstand R7 verbunden und die andere Seite des siebten (bitte ggf. umnummerieren !) Widerstands R7 mit dem Kollektor des dritten Transistors T3 verbunden, und ist der Kollektor des zweiten Transistors T2 mit dem Gate des vierten (Feldeffekt)Transistors T4, dem Gate des fünften (Feldeffekt)Transistor T5 und einem der Anschlüsse des vierten Widerstands R4 verbunden. Der Basis des dritten Transistors T3 wird ein Terminierungs- Zuschalt- oder Wegschaltsignal von dem Mikrocontroller µC der externen elektronischen Steuereinheit zugeführt, und der Emitter des dritten Transistors T3 ist mit der Masse bzw. dem Bezugspotenzial verbunden.

Im Falle des vierten Transistors T4 ist darüber hinaus dessen Drain mit der höherpegeligen Busleitung CAN_H verbunden, und ist dessen Source mit einem Anschluss des fünften Widerstands R5 verbunden, wohingegen im Falle des fünften Transistors T5 dessen Drain mit der niedrigerpegeligen Busleitung CAN_L und dessen Source mit einem Anschluss des sechsten Widerstands R6 verbunden ist. Die jeweils anderen Anschlüsse des vierten Widerstands R4, des fünften Widerstands R5 und des sechsten Widerstands R6 sind an einem gemeinsamen Knotenpunkt zusammengeführt, mit welchem auch der zweite Kondensator C2 verbunden ist, dessen anderer Anschluss auf Masse bzw. dem Bezugspotenzial liegt. Insoweit sind in dieser Konfiguration der vierte Transistor T4 und der fünfte Transistor T5 antiseriell angeordnet (die jeweiligen Source-Regionen liegen über die Widerstände R5, R6 an einem gemeinsamen Knoten). Es wird angemerkt, dass auch an dem zweiten Kondensator C2 die mittlere Busspannung U_rez anliegt.

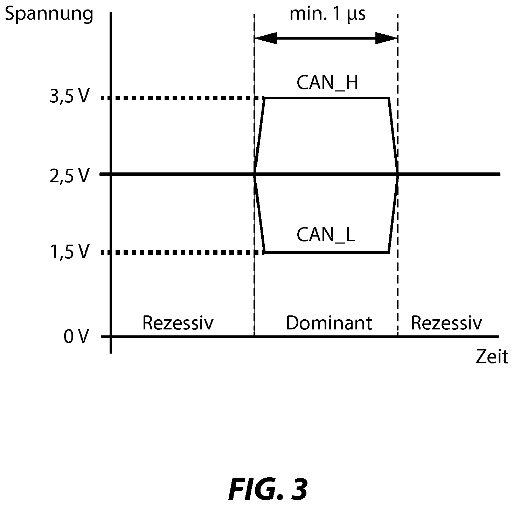

Nachstehend wird die Funktionsweise der so weit unter Bezugnahme auf **Fig. 2** beschriebenen Schaltungsanordnung unter weiterer Bezugnahme auf **Fig. 3** ergänzend und näher erläutert.

Gemäß dem vorliegenden Ausführungsbeispiel werden die beiden Abschluss- bzw. Terminierungswiderstände, d.h. der fünfte Widerstand R5 und der sechste Widerstand R6, die in diesem Ausführungsbeispiel eine Terminierungseinrichtung bilden, symmetrisch bzw. gleichzeitig mit den beiden Feldeffekttransistoren, d.h. dem vierten Transistor T4 bzw. dem fünften Transistor T5, geschaltet.

Die beiden FETs T4, T5 sind antiseriell zueinander verschaltet und schalten im durchgesteuerten Zustand die beiden Widerstände R5, R6 an den angeschlossenen Bus. Die FETs werden spannungsgesteuert, d.h. stromlos.

Der vierte Widerstand R4 ist in diesem Zusammenhang dazu angeordnet, beide Feldeffekttransistoren T4, T5 gesperrt zu halten, solange der zweite Transistor T2 kein Spannungssignal liefert, d.h. ein solches dem vierten und dem fünften Transistor T4, T5 vorenthält. Dies entspricht einem Zustand, in welchem die Terminierungswiderstände R5, R6 von dem seriellen Bus weg- bzw. abgeschaltet sind.

Um Durchzuschalten, benötigen die Feldeffekttransistoren T4, T5 eine Gate-Source-Spannung bzw. Durchschaltespannung oder Ansteuerspannung Vcc von wenigstens 5 V. Vorzugsweise sollte die Ansteuerspannung Vcc wenigstens 10 V, max. ca. 20V, betragen. Da der Gleichtakt- bzw. Common Mode-Bereich des seriellen Busses, z.B. der bei dem in diesem Ausführungsbeispiel verwendeten CAN-Bus zwischen -5 V und +12 V liegt, nicht eingeschränkt werden darf, muss daher die Ansteuerspannung Vcc innerhalb dieses gesamten Gleichtaktbereichs eine Gate-Source-Spannung von wenigstens 5 V bzw. vorzugsweise 10 V bereitstellen können.

Fig. 3 zeigt eine schematische Darstellung mit Bezug auf einen ausschnittsweisen Signalverlauf am Beispiel eines CAN-Busses, genauer auf Spannungsänderungen auf den CAN-Leitungen bei Wechsel zwischen dominantem und rezessivem Zustand.

In einem Ruhezustand liegen beide Busleitungen auf einem gleichen voreingestellten Ruhepegel von 2,5 V. Dieser Ruhepegel wird auch als rezessiver Zustand bezeichnet. Im dominanten Zustand steigt die Spannung auf der CAN-High-Leitung um mindestens 1V über den Rezessivpegel an. Die Spannung auf der CAN-Low-Leitung fällt um mindestens 1V unter den Rezessivpegel. Daraus ergibt sich, dass die Spannung auf der CAN-High-Leitung im aktiven Zustand auf mindestens 3,5V ansteigt (2,5V + 1V = 3,5V), und die Spannung auf der CAN-Low-Leitung auf noch maximal 1,5V abfällt (2,5V - 1V = 1,5V). Die Spannungsdifferenz zwischen der CAN-High-Leitung und der CAN-Low-Leitung beträgt daher im rezessiven Zustand 0V und im dominanten Zustand mindestens 2V.

Zur Gewinnung der vorgenannten Ansteuerspannung wird auf der vorgenannten Grundlage daher in diesem Ausführungsbeispiel die mittlere Busspannung U_rez (wie vorstehend angegeben etwa. +2,5V) über den ersten und den zweiten Widerstand R1, R2, die als solche gleich ausgebildet sind, und den ersten Kondensator C1 als Filter hochohmig von dem CAN-Bus ausgekoppelt. Die hochohmige Auskopplung gewährleistet hierbei eine geringstmögliche Beeinflussung des Busses. Der als Impedanzwandler arbeitende Operationsverstärker OP1 wandelt die ausgekoppelte mittlere Busspannung U_rez wie vorstehend beschrieben in eine niederohmige Spannungsquelle um. Ausgehend von dem Ausgang des Operationsverstärkers OP1 ist eine die erste (Zener)Diode D1 mit beispielsweise 10V an den als Vorwiderstand arbeitenden dritten Widerstand R3 und den als Längstransistor arbeitenden ersten Transistor T1 geschaltet, die in Zusammenwirkung einen variablen Spannungsregler bilden. Die Ansteuerspannung Vcc wird dabei auf den Wert von etwa der Summe der Z-Diodenspannung der ersten D1 und der Spannung U_rez am Ausgang des Operationsverstärkers OP1 geregelt.

Die ausgekoppelte mittlere Busspannung U_rez liegt ebenfalls am Knoten- bzw. Mittenpunkt der beiden Abschluss- bzw. Terminierungswiderstände R5, R6 und des zweiten Kondensators C2 an, sofern der vierte Transistor T4 und der fünfte Transistor T5 durchgeschaltet sind. Die ausgekoppelte mittlere Busspannung U_rez liegt darüber hinaus an den beiden Source-Anschlüssen des vierten Transistors T4 und des fünften Transistors T5 an. Um den vierten Transistor T4 und den fünften Transistor T5 durchzuschalten, muss die Gate-Source-Spannung an den Transistoren T4, T5 zumindest 5V betragen. Dazu muss die Ansteuerspannung Vcc größer als die ausgekoppelte mittlere Busspannung U_rez + 5V sein. Die Schaltungsanordnung des vorliegenden Ausführungsbeispiels ist für eine Gate-Source-Spannung von etwa 10 V ausgelegt, und kann daher den vierten Transistor T4 und den fünften Transistor T5 voll durchsteuern. Ein durchgesteuerter bzw. durchgeschalteter Zustand des vierten Transistors T4 und des fünften Transistors T5 entspricht einem Zustand, in welchem die Terminierungswiderstände R5, R6 an den seriellen Bus zu- bzw. angeschaltet sind.

Nachstehend erfolgt eine Grenzbetrachtung für den Gleichtaktbereich des seriellen Busses, der wie vorstehend erwähnt nicht eingeschränkt werden darf und der bei zwischen etwa -5 V und +12 V liegt.

Wenn durch beispielsweise einen Busfehler oder Masseversätze die mittlere Bus- oder Signalspannung bzw. Gleichtaktspannung nach maximal 12V als der oberen Grenze des Gleichtaktbereichs verschoben wird, führt der Operationsverstärker OP1 die Ansteuerspannung Vcc auf dieses Niveau nach, und werden in diesem Fall der erste Transistor T4 und der zweite Transistor T5 entsprechend mit einer Gate-Source-Spannung von etwa 22V angesteuert. Der Gleichtaktbereich wird daher durch die Schaltungsanordnung gemäß dem vorliegenden Ausführungsbeispiel in dieser Richtung nicht eingeschränkt.

Wenn demgegenüber die ausgekoppelte mittlere Busspannung U_rez unter das Massepotenzial bzw. Bezugspotenzial (z.B. GND) sinkt, verharrt der Ausgang des Operationsverstärkers OP1 dem Massepotenzial bzw. Bezugspotential. In diesem Fall erreicht die Ansteuerspannung Vcc aufgrund der ersten Diode D1 jedenfalls etwa 10V, und werden der vierte Transistor T4 und der fünfte Transistor T5 mit einer Gate-Source-Spannung von etwa 10 V bzw. 15V sicher durchgeschaltet. Der Gleichtaktbereich wird daher durch die Schaltungsanordnung gemäß dem vorliegenden Ausführungsbeispiel auch in dieser Richtung nicht eingeschränkt.

Vorstehend wurde somit eine Schaltungsanordnung für einen schaltbaren Leitungsabschluss eines seriellen Busses beschrieben, die eine elektronische Schaltvorrichtung T4, T5 beinhaltet, die zwischen Signalleitungen des seriellen Busses geschaltet und dazu angeordnet ist, gesteuert durch eine Steuereinrichtung einer elektronischen Steuereinheit einen vorbestimmten Leitungsabschluss an den seriellen Bus zu schalten oder den Leitungsabschluss von dem seriellen Bus wegzuschalten. Die elektronische Schaltvorrichtung T4, T5 beinhaltet eine erste und eine zweite elektronische Schalteinrichtung T4, T5, und der Leitungsabschluss R5, R6 beinhaltet ein erstes und ein zweites Leitungsabschlusselement R5, R6. Die erste und die zweite elektronische Schalteinrichtung T4, T5 sind antiseriell zueinander beschaltet und dazu angeordnet, symmetrisch und spannungsgesteuert jeweils das erste und das zweite Leitungsabschlusselement (R5, R6) an die erste und die zweite Signalleitung CAN_H, CAN_L des seriellen Busses anzuschalten oder von dieser wegzuschalten.

In anderen Worten beinhaltet die elektronische Schaltvorrichtung T4, T5 eine erste elektronische Schalteinrichtung T4 und eine zweite elektronische Schalteinrichtung T5, und beinhaltet der Leitungsabschluss R5, R6 ein erstes Leitungsabschlusselement R5 und ein zweites Leitungsabschlusselement R6. Die erste elektronische Schalteinrichtung T4 ist zwischen einer ersten Signalleitung CAN_H des seriellen Busses und dem ersten Leitungsabschlusselement R5 liegend und dazu angeordnet, spannungsgesteuert das erste Leitungsabschlusselement R5 an die erste Signalleitung CAN_H des seriellen Busses anzuschalten oder von dieser wegzuschalten. Die zweite elektronische Schalteinrichtung T5 ist zwischen einer zweiten Signalleitung CAN_L des seriellen Busses und einem zweiten Leitungsabschlusselement R6 liegend und dazu angeordnet, spannungsgesteuert das zweite Leitungsabschlusselement R6 an die zweite Signalleitung CAN_L des seriellen Busses anzuschalten oder von dieser wegzuschalten. Die erste und die zweite elektronische Schalteinrichtung T4, T5 sind antiseriell zueinander beschaltet und dazu ansteuerbar, symmetrisch das erste Leitungsabschlusselement R5 und das zweite Leitungsabschlusselement R6 zu schalten und mit den jeweiligen Signalleitungen CAN_H, CAN_L des seriellen Busses zu verbinden oder von diesen zu trennen.

Es versteht sich, dass die Erfindung nicht auf das vorstehend konkret beschriebene Ausführungsbeispiel beschränkt ist, sondern dass Modifikationen, die in äquivalenten, vergleichbaren oder ähnlichen Konfigurationen resultieren, für den Fachmann ohne weiteres ersichtlich und daher nicht als Abweichen vom Gegenstand der Erfindung wie in den nachfolgenden Ansprüchen definiert zu werten sind.

### BEZUGSZEICHENLISTE

- K: Schaltungsanordnung
- µC: Mikrocontroller
- C1: erster Kondensator
- C2: zweiter Kondensator
- T1: erster Transistor
- T2: zweiter Transistor
- T3: dritter Transistor
- T4: vierter Transistor
- T5: fünfter Transistor
- R1: erster Widerstand
- R2: zweiter Widerstand
- R3: dritter Widerstand
- R4: vierter Widerstand
- R5: fünfter Widerstand
- R6: sechster Widerstand
- R7: siebter Widerstand
- D1: erste Diode
- D2: zweite Diode
- OP1: Operationsverstärker
- Vcc: Ansteuerspannung
- UB_S: Versorgungsspannung
- U_rez: mittlere Busspannung

## Patentansprüche

1. Schaltungsanordnung für einen schaltbaren Leitungsabschluss eines seriellen Busses, beinhaltend eine elektronische Schaltvorrichtung (T4, T5), die eine erste und eine zweite elektronische Schalteinrichtung (T4, T5) beinhaltet und die zwischen Signalleitungen des seriellen Busses geschaltet und dazu angeordnet ist, gesteuert durch eine Steuereinrichtung einer elektronischen Steuereinheit einen vorbestimmten Leitungsabschluss (R5, R6) an den seriellen Bus zu schalten oder den Leitungsabschluss von dem seriellen Bus wegzuschalten, und eine Sperreinrichtung mit einem Sperrelement (R4); **gekennzeichnet durch** eine dritte elektronische Schalteinrichtung (T2), die dazu angeordnet ist, die erste elektronische Schalteinrichtung (T4) und die zweite elektronische Schalteinrichtung (T5) durch Zuführen oder Vorenthalten einer Ansteuerspannung (Vcc) anzusteuern, wobei
das Sperrelement (R4) die erste elektronische Schalteinrichtung (T4) und die ' zweite elektronische Schalteinrichtung (T5) in einem gesperrten Zustand hält, wenn die dritte elektronische Schalteinrichtung (T2) der ersten elektronischen Schalteinrichtung (T4) und der zweiten elektronischen Schalteinrichtung (T5) die Ansteuerspannung (Vcc) vorenthält, und wobei
der Leitungsabschluss (R5, R6) ein erstes und ein zweites Leitungsabschlusselement (R5, R6) beinhaltet;
das Sperrelement (R4) ein ohmscher Widerstand ist, der an einen gemeinsamen Knotenpunkt des ersten Leitungsabschlusselements (R5) und des zweiten Leitungsabschlusselements (R6) beschaltet ist, und die dritte elektronische Schalteinrichtung (T2) ein in Abhängigkeit eines von der externen Steuereinrichtung zugeführten Steuersignals schaltender elektronischer Schalter, insbesondere ein Bipolartransistor oder ein MOSFET ist.

2. Schaltungsanordnung nach Anspruch 1, **dadurch gekennzeichnet, dass**
die erste und die zweite elektronische Schalteinrichtung (T4, T5) antiseriell zueinander beschaltet sind; und
die erste und die zweite elektronische Schalteinrichtung ,(T4, T5) dazu angeordnet sind, symmetrisch und spannungsgesteuert jeweils das erste und das zweite Leitungsabschlusselement (R5, R6) an die erste und die zweite Signalleitung (CAN_H, CAN_L) des seriellen Busses anzuschalten oder von dieser wegzuschalten.

3. Schaltungsanordnung nach Anspruch 1 oder 2, **dadurch gekennzeichnet, dass**
das erste Leitungsabschlusselement (R5) ein ohmscher Widerstand ist;
das zweite Leitungsabschlusselement (R6) ein ohmscher Widerstand ist; und
das erste und das zweite Leitungsabschlusselement (R5, R6) seriell geschaltet und dazu angeordnet sind, eine Terminierungseinrichtung mit einem vorbestimmten Leitungsabschlusswiderstand für ein physisches Ende des seriellen Busses bereitzustellen.

4. Schaltungsanordnung nach einem der vorangehenden Ansprüche, **dadurch gekennzeichnet, dass**
die erste elektronische Schalteinrichtung (T4) und die zweite elektronische Schalteinrichtung (T5) eine Sperreinrichtung bilden, die dazu angeordnet ist, ein eine Wechselspannungscharakteristik aufweisendes Signal des seriellen Busses zu sperren.

5. Schaltungsanordnung nach einem der vorangehenden Ansprüche, **dadurch gekennzeichnet, dass**
die erste elektronische Schalteinrichtung (T4) und die zweite elektronische Schalteinrichtung (T5) Feldeffekttransistoren, insbesondere MOSFETs sind.

6. Schaltungsanordnung nach einem der vorangehenden Ansprüche, **dadurch gekennzeichnet, dass**
der serielle Bus ein differenzieller Bus, insbesondere ein CAN-Bus ist und die erste elektronische Schalteinrichtung (T4) und die zweite elektronische Schalteinrichtung (T5) dazu angeordnet sind, in einem Gleichtaktbereich des Busses zu arbeiten.

7. Schaltungsanordnung nach einem der vorangehenden Ansprüche, **gekennzeichnet durch**
eine Spannungsauskopplungseinrichtung (R1, R2, C1), die dazu angeordnet ist, eine mittlere Busspannung (U_rez) des seriellen Busses hochohmig auszukoppeln.

8. Schaltungsanordnung nach Anspruch 7, **gekennzeichnet durch**
eine Spannungsquellen-Erzeugungseinrichtung (OP1), die dazu angeordnet ist, aus der ausgekoppelten mittleren Busspannung eine niederohmige Spannungsquelle zur Bereitstellung der Ansteuerspannung (Vcc) für die erste und die zweite elektronische Schalteinrichtung (T4, T5) zu erzeugen, wobei die Ansteuerspannung (Vcc) derart erzeugt wird, dass innerhalb eines Gleichtaktbereichs des seriellen Busses für die erste elektronische Schalteinrichtung (T4) und die zweite elektronische Schalteinrichtung (T5) eine die erste elektronische Schalteinrichtung (T4) und die zweite elektronische Schalteinrichtung (T5) sicher durchschaltende Gate-Source-Spannung bereitgestellt wird.

9. Schaltungsanordnung nach Anspruch 8, **dadurch gekennzeichnet, dass**
die Spannungsquellen-Erzeugungseinrichtung (OP1) dazu angeordnet ist, die Ansteuerspannung (Vcc) für die erste und die zweite elektronische Schalteinrichtung (T4, T5) innerhalb des Gleichtaktbereichs des seriellen Busses auf der Grundlage der ausgekoppelten mittleren Busspannung zu erzeugen und bei einer betriebsbedingt auftretenden Verschiebung der mittleren Busspannung die Ansteuerspannung (Vcc) und damit verbunden die Schaltbarkeit der ersten elektronischen Schalteinrichtung (T4) und der zweiten elektronischen Schalteinrichtung (T5) zumindest innerhalb der Grenzen des Gleichtaktbereichs des seriellen Busses nachzuführen.

10. Schaltungsanordnung nach einem der Ansprüche 8 oder 9, **gekennzeichnet durch**
eine Spannungsregeleinrichtung (OP1, D1, R3, T1), die dazu angeordnet ist, die durch die Spannungsregler (OP1) erzeugte Ansteuerspannung (Vcc) auf einen vorbestimmten Wert zu regeln.

11. Schaltungsanordnung nach einem der Ansprüche 8 bis 10, **gekennzeichnet durch**
eine Überspannungsbegrenzungseinrichtung (D2) zur Entstörung von Spannungsspitzen an der Ansteuerspannung (Vcc)

12. Schaltungsanordnung nach einem der Ansprüche 8 bis 11, **gekennzeichnet durch**
eine Überspannungsschutzeinrichtung (D2) zum Schutz der Spannungsquellen-Erzeugungseinrichtung (OP1) vor Überspannung.

13. Schaltungsanordnung nach einem der Ansprüche 8 bis 12, **gekennzeichnet durch** einen Spannungsausgang, an dem die Ausgangsspannung der Spannungsquellen-Erzeugungseinrichtung (OP1) zu Diagnosezwecken an eine externe Einrichtung ausleitbar ist.

## Claims

1. Circuit arrangement for a switchable line termination of a serial bus, comprising
an electronic switching apparatus (T4, T5) which comprises a first and a second electronic switching device (T4, T5) and is connected between signal lines of the serial bus and is arranged, under the control of a control device of an electronic control unit, to connect a predetermined line termination (R5, R6) to the serial bus or to disconnect the line termination from the serial bus, and
a blocking device having a blocking element (R4); **characterized by**
a third electronic switching device (T2) which is arranged to control the first electronic switching device (T4) and the second electronic switching device (T5) by supplying or withholding a control voltage (Vcc), wherein
the blocking element (R4) keeps the first electronic switching device (T4) and the second electronic switching device (T5) in a blocked state if the third electronic switching device (T2) withholds the control voltage (Vcc) from the first electronic switching device (T4) and the second electronic switching device (T5), and wherein
the line termination (R5, R6) comprises a first and a second line termination element (R5, R6);
the blocking element (R4) is a non-reactive resistor which is connected to a common node of the first line termination element (R5) and of the second line termination element (R6), and the third electronic switching device (T2) is an electronic switch, in particular a bipolar transistor or a MOSFET, which switches on the basis of a control signal supplied by the external control device.

2. Circuit arrangement according to Claim 1, **characterized in that**
the first and second electronic switching devices (T4, T5) are reverse-connected in series with one another; and
the first and second electronic switching devices (T4, T5) are arranged to connect the first and second line termination elements (R5, R6) to the first and second signal lines (CAN_H, CAN_L) of the serial bus, respectively, or to disconnect them therefrom in a symmetrical and voltage-controlled manner.

3. Circuit arrangement according to Claim 1 or 2, **characterized in that**
the first line termination element (R5) is a non-reactive resistor;
the second line termination element (R6) is a non-reactive resistor; and
the first and second line termination elements (R5, R6) are connected in series and are arranged to provide a termination device having a predetermined line terminating resistor for a physical end of the serial bus.

4. Circuit arrangement according to one of the preceding claims, **characterized in that**
the first electronic switching device (T4) and the second electronic switching device (T5) form a blocking device which is arranged to block a signal having an AC voltage characteristic of the serial bus.

5. Circuit arrangement according to one of the preceding claims, **characterized in that**
the first electronic switching device (T4) and the second electronic switching device (T5) are field effect transistors, in particular MOSFETs.

6. Circuit arrangement according to one of the preceding claims, **characterized in that**
the serial bus is a differential bus, in particular a CAN bus, and the first electronic switching device (T4) and the second electronic switching device (T5) are arranged to operate in a common mode range of the bus.

7. Circuit arrangement according to one of the preceding claims, **characterized by**
a voltage output device (R1, R2, C1) which is arranged to output a medium bus voltage (U_rez) of the serial bus in a high-impedance manner.

8. Circuit arrangement according to Claim 7, **characterized by**
a voltage source generation device (OP1) which is arranged to generate a low-impedance voltage source for providing the control voltage (Vcc) for the first and second electronic switching devices (T4, T5) from the medium bus voltage which has been output, wherein the control voltage (Vcc) is generated in such a manner that a gate-source voltage which reliably turns on the first electronic switching device (T4) and the second electronic switching device (T5) is provided for the first electronic switching device (T4) and the second electronic switching device (T5) within a common mode range of the serial bus.

9. Circuit arrangement according to Claim 8, **characterized in that**
the voltage source generation device (OP1) is arranged to generate the control voltage (Vcc) for the first and second electronic switching devices (T4, T5) within the common mode range of the serial bus on the basis of the medium bus voltage which has been output and, in the event of a shift in the medium bus voltage owing to operation, to track the control voltage (Vcc) and, in association with this, the switchability of the first electronic switching device (T4) and of the second electronic switching device (T5) at least within the limits of the common mode range of the serial bus.

10. Circuit arrangement according to either of Claims 8 and 9, **characterized by**
a voltage regulating device (OP1, D1, R3, T1) which is arranged to regulate the control voltage (Vcc) generated by the voltage regulators (OP1) to a predetermined value.

11. Circuit arrangement according to one of Claims 8 to 10, **characterized by**
an overvoltage limitation device (D2) for suppressing the interference of voltage spikes in the control voltage (Vcc).

12. Circuit arrangement according to one of Claims 8 to 11, **characterized by**
an overvoltage protection device (D2) for protecting the voltage source generation device (OP1) from overvoltage.

13. Circuit arrangement according to one of Claims 8 to 12, **characterized by** a voltage output at which the output voltage of the voltage source generation device (OP1) can be discharged to an external device for diagnostic purposes.

## Revendications

1. Montage pour une terminaison de ligne commutable d'un bus série, comportant
un système (T4, T5) électronique de coupure, qui comporte un premier et un deuxième dispositifs (T4, T5) électroniques de coupure et qui est monté entre des lignes de signal du bus série et disposé de manière, à commandé par un dispositif de commande d'une unité électronique de commande, à connecter, une terminaison (R5, R6) de ligne déterminée à l'avance au bus série, ou à déconnecter la terminaison de ligne du bus série, et
un dispositif de blocage ayant un élément (R4) de blocage, **caractérisé par**
un troisième dispositif (T2) électronique de coupure, qui est monté pour commander le premier dispositif (T4) électronique de coupure et le deuxième dispositif (T5) électronique de coupure par application ou par retenue d'une tension (Vcc) de commande, dans lequel
l'élément (R4) de blocage maintient le premier dispositif (T4) électronique de coupure et le deuxième dispositif (T5) électronique de coupure dans un état bloqué, si le troisième dispositif (T2) électronique de coupure retient la tension (Vcc) de commande du premier dispositif (T4) électronique de coupure et du deuxième dispositif (T5) électronique de coupure, et dans lequel
la terminaison (R5, R6) de ligne comporte un premier et un deuxième élément (R5, R6) de terminaison de ligne ;
l'élément (R4) de blocage est une résistance ohmique, qui est connectée à un point nodal commun du premier élément (R5) de terminaison de ligne et du deuxième élément (R6) de terminaison de ligne et le troisième dispositif (T2) électronique de coupure est un interrupteur électronique de coupure en fonction d'un signal de commande envoyé par le dispositif de commande extérieur, en étant notamment un transistor bipolaire ou un MOSFET.

2. Montage suivant la revendication 1, **caractérisé en ce que**
le premier et le deuxième dispositifs (T4, T5) électroniques de coupure sont montés tête bêche ; et
le premier et le deuxième dispositifs (T4, T5) électroniques de coupure sont montés de manière à connecter, de façon symétrique et en étant commandés par la tension, respectivement, le premier et le deuxième éléments (R5, R6) de terminaison de ligne à la première et à la deuxième lignes (CAN_H, CAN_L) de signal du bus série et à les en déconnecter.

3. Montage suivant la revendication 1 ou 2, **caractérisé en ce que**
le premier élément (R5) de terminaison de ligne est une résistance ohmique ;
le deuxième élément (R6) de terminaison de ligne est une résistance ohmique ; et
le premier et le deuxième éléments (R5, R6) de terminaison de ligne sont montés en série et sont montés de manière à procurer un dispositif de terminaison ayant une résistance de terminaison de ligne déterminée à l'avance pour une extrémité physique du bus série.

4. Montage suivant l'une des revendications précédentes, **caractérisé en ce que**
le premier dispositif (T4) électronique de coupure et le deuxième dispositif (T5) électronique de coupure forment un dispositif de blocage monté de manière à bloquer un signal du bus série ayant une caractéristique de tension alternative.

5. Montage suivant l'une des revendications précédentes, **caractérisé en ce que**
le premier dispositif (T4) électronique de coupure et le deuxième dispositif (T5) électronique de coupure sont des transistors à effet de champ, notamment des MOSFET.

6. Montage suivant l'une des revendications précédentes, **caractérisé en ce que**
le bus série est un bus différentiel, notamment un bus CAN et le premier dispositif (4) électronique de coupure et le deuxième dispositif (T5) électronique de coupure sont montés de manière à travailler dans une plage en mode commun du bus.

7. Montage suivant l'une des revendications précédentes, **caractérisé par**
un dispositif (R1, R2, C1) de découplage de tension, qui est monté pour découpler à grande valeur ohmique une tension (U_rez) moyenne du bus série.

8. Montage suivant la revendication 7, **caractérisé par**
un dispositif (OP1) de production d'une sources de tension, qui est monté pour produire, à partir de la tension moyenne de bus découplée, une source de tension à basse valeur ohmique pour la mise à dispositif de la tension (Vcc) de commande du premier et du deuxième dispositifs (T4, T5) électronique de coupure, la tension (Vcc) de commande étant produite de manière à disposer, dans une plage en mode commun du bus série pour le premier dispositif (T4) électronique de coupure et le deuxième dispositif (T5) électronique de coupure, d'une tension de grille-source rendant passant de manière sûre le premier dispositif (T4) électronique de coupure et le deuxième dispositif (T5) électronique de coupure.

9. Montage suivant la revendication 8, **caractérisé en ce que**
le dispositif (OP1) de production de sources de tension est monté de manière à produire, sur la base de la tension moyenne de bus découplée dans la plage en mode commun du bus série, la tension (Vcc) de commande du premier et du deuxième dispositifs (T4, T5) électronique de coupure et, s'il se produit un décalage du au fonctionnement de la tension moyenne de bus, poursuivre la tension (Vcc) de commande et, lié à cela, la possibilité de coupure du premier dispositif (T4) électronique de coupure et du deuxième dispositif (T5) électronique de coupure, au moins dans les limites de la plage en mode commun du bus série.

10. Montage suivant l'une des revendications 8 ou 9, **caractérisé par**
un dispositif (OP1, D1, R3, T1) de réglage de la tension, qui est monté de manière à régler à une valeur déterminée à l'avance la tension (Vcc) de commande produite par le régleur (OP1) de tension.

11. Montage suivant l'une des revendications 8 à 10, **caractérisé par**
un dispositif (D2) de limitation de la surtension pour le déparasitage de pointes de la tension (Vcc) de commande.

12. Montage suivant l'une des revendications 8 à 11,**caractérisé par**
un dispositif (D) de protection vis-à-vis de la surtension pour protéger le dispositif (OP1) de production de sources de tension de la surtension.

13. Montage suivant l'une des revendications 8 à 12, **caractérisé par**
une sortie de tension où la tension de sortie du dispositif (OP1) de production de sources de tension peut, à des fins de diagnostic, être appliquée à un dispositif extérieur.
